# EUROPÄISCHE PATENTSCHRIFT

(11) **EP 3 762 857 B1**
(45) Veröffentlichungstag und Bekanntmachung des Hinweises auf die Patenterteilung: **09.04.2025**
(21) Anmeldenummer: 19709621.7
(22) Anmeldetag: 26.02.2019
(51) Int. Cl.: G06V 20/58, G06V 20/64

(54) **SURROUNDVIEW-SYSTEM MIT ANGEPASSTER PROJEKTIONSFLÄCHE**
SURROUND VIEW SYSTEM HAVING AN ADAPTED PROJECTION SURFACE
SYSTÈME DE VISION PANORAMIQUE À SURFACE DE PROJECTION ADAPTÉE

(30) Priorität: 09.03.2018 DE 102018203590
(43) Veröffentlichungstag der Anmeldung: 13.01.2021
(73) Patentinhaber: Continental Autonomous Mobility Germany GmbH, 85057 Ingolstadt (DE)
(72) Erfinder: BÜRKER, Martin, 90411 Nürnberg (DE); GLOGER, Charlotte, 90411 Nürnberg (DE); PANAKOS, Andreas, 90411 Nürnberg (DE); KITTMANN, Frank, 90411 Nürnberg (DE)
(74) Vertreter: Continental Corporation
(86) Internationale Anmeldenummer: PCT/DE2019/200018
(87) Internationale Veröffentlichungsnummer: WO 2019/170202

(56) Entgegenhaltungen:
- DE-A1- 102009 005 505
- DE-A1- 102011 084 554
- DE-A1- 102014 009 644
- DE-A1- 102014 208 664
- US-A1- 2014 278 065
- US-B2- 9 013 286

## Beschreibung

Die Erfindung betrifft ein Surroundview-System für ein Fahrzeug, ein Fahrzeug mit einem solchen Surroundview-System, ein Verfahren zum Anpassen einer Projektionsfläche eines Surroundview-Systems, ein Programmelement und einem computerlesbaren Medium.

Fahrzeuge werden zunehmend mit Fahrerassistenzsystemen ausgerüstet, welche den Fahrer bei der Durchführung von Fahrmanövern unterstützen. Diese Fahrerassistenzsysteme enthalten zum Teil Surroundview-Systeme, die es dem Fahrer des Fahrzeugs erlauben, die Fahrzeugumgebung anzuzeigen. Derartige Surroundview-Systeme umfassen eine oder mehrere Fahrzeugkameras, welche reale Bilder der Fahrzeugumgebung erfassen und anschließend durch eine Datenverarbeitungseinheit des Surroundview-Systems zu einem Umgebungsbild der Fahrzeugumgebung zusammengefügt werden. Das Bild der Fahrzeugumgebung wird anschließend dem Fahrer auf einer Anzeigeeinheit angezeigt.

Hierzu können die von den Kameras des Surroundview-Systems gewonnen realen Bilder der Fahrzeugumgebung zunächst auf Projektionspunkte einer Projektionsfläche oder eines virtuellen Umgebungsmodells der Fahrzeugumgebung projiziert werden. Anschließend kann aus der Perspektive einer virtuellen Kamera auf das so erzeugte zusammengesetzt Surroundview-Bild der Fahrzeugumgebung geschlossen werden, was wiederum auf der Anzeigeeinheit als Surroundview-Bild angezeigt werden kann. Die Position der virtuellen Kamera für die Berechnung des angezeigten Surroundview-Bildes kann hierbei variiert werden, sodass je nach Bedarf bzw. je nach Fahrsituation dem Fahrer eine andere Darstellung der Fahrzeugumgebung angezeigt werden kann. Die Wahl des dreidimensionalen Umgebungsmodells, für die Projektion der realen Bilder sowie für die Erzeugung des zusammengesetzten Surroundview-Bildes, ist dabei entscheidend für die Qualität des angezeigten Bildes.

Beispiele aus dem Stand der Technik sind DE 10 2011 084554 A1, US 2014/278065 A1 und DE 10 2014 208664 A1.

Es ist eine Aufgabe der Erfindung, die Projektion von Bilddaten zu verbessern.

Diese Aufgabe wird durch den Gegenstand der unabhängigen Ansprüche gelöst. Ausführungsformen und Weiterbildungen sind den abhängigen Ansprüchen, der Beschreibung und den Figuren zu entnehmen.

Ein erster Aspekt der Erfindung betrifft ein Surroundview-System für ein Fahrzeug gemäß Anspruch 1.

Mit anderen Worten kann die 3D Form eines erkannten Objekts zu der Projektionsfläche des Surroundview-Systems hinzugefügt werden, um ein verbessertes virtuelles Umgebungsmodell um das Fahrzeug zu erhalten. Hierbei kann die Erfassungseinheit Umfelddaten um ein Fahrzeug erfassen. Diese Umfelddaten können durch eine Auswerteeinheit verarbeitet werden, sodass diese beispielsweise ein Objekt in den Umfelddaten erkennt. Ferner kann die Auswerteeinheit dazu eingerichtet sein, die 3D Form des erkennten Objekts zu bestimmen, entweder direkt durch Berechnen oder Auswerten der Umfelddaten oder indirekt durch einen Vergleich des erkannten Objekts zu vordefinierten Objekten. Z.B. kann ein Fahrzeug erkannt werden und aus einer Datenbank kann eine typische 3D Form eines Fahrzeugs verwendet werden. Die bestimmte 3D Form des erkannten Objekts kann anschließend zu der Projektionsfläche des Surroundview-Systems hinzugefügt werden. Dadurch können die erfassten Umfelddaten möglichst detailliert und frei von Verzerrungen auf die angepasste Projektionsfläche projiziert und anschließend dem Fahrer angezeigt werden, z.B. auf einem Monitor oder einem Display. Diese Verzerrungen können insbesondere dann entstehen, wenn Umfelddaten unter einem bestimmen Blickwinkel bzw. einer Perspektive aufgenommen wurden und für die Darstellung für den Fahrer ein Wechsel der Perspektive hin zu einer virtuellen Perspektive stattfindet. Mit anderen Worten, wenn die virtuelle Kamera zur Darstellung für den Fahrer an einer anderen Position als die tatsächlichen Kameras ist. Beispielsweise können die Umfelddaten durch vier Kameras erzeugt worden sein und durch die Auswerteeinheit wird ein Surroundview-Bild erzeugt (z.B. die vier einzelnen Bilder werden zusammengesetzt), welches eine virtuelle Draufsicht (von oben) auf das Fahrzeug darstellt. Diese Draufsicht wurde durch die Auswerteeinheit erzeugt, indem diese eine virtuelle Perspektive über dem Fahrzeug, basierend auf den real erfassten Umfelddaten, erzeugt. Bei dieser Transformation können insbesondere erhabene Objekte, wie beispielsweise andere Fahrzeuge, Pfosten oder Blumenkübel, durch die jeweilige Perspektive beim Erzeugen der Umfelddaten, zu Verzerrungen in einer geänderten virtuellen Perspektive, welche anschließend dem Fahrer angezeigt wird.

Die Projektionsfläche (Grundform bzw. Ausgangsform der Projektionsfläche) kann hierbei verschiedene Formen aufweisen, beispielsweise die Form einer Schüssel, Schale oder eine Ebene, aber auch jede andere beliebige Form. Ferner kann die Projektionsfläche als virtuelles Umgebungsmodell des Fahrzeugs zur Repräsentation der erfassten Umfelddaten dienen.

Gemäß einer Ausführungsform der Erfindung ist die Erfassungseinheit eine Kamera.

Alternativ oder zusätzlich kann die Erfassungseinheit mehreren Kameras (auch Stereo-Kameras) aufweisen und/oder Sensoren zur Ermittlung von Tiefeninformation, wie beispielsweise ein Radar-, ein Lidar- oder ein Ultraschallsensor oder auch einen Laserscanner. Ferner kann die Erfassungseinheit auch eine Kombination der oben genannten Sensoren aufweisen. Durch die Tiefeninformation kann die 3D Form der erkannten Objekte direkt durch die Auswerteeinheit bestimmt werden.

Gemäß einer Ausführungsform der Erfindung ist die 3D Form des erkannten Objekts vordefiniert und korrespondiert mit dem durch die Auswerteeinheit erkannten Objekt.

Mit anderen Worten kann die 3D Form des erkannten Objekts durch einen Vergleich mit einer Datenbank oder einer Tabelle bestimmt werden. Die Auswerteeinheit kann in den erfassten Umfelddaten ein Objekt erkennen und diese Objekt mit der Datenbank oder der Tabelle vergleichen, um die 3D Form des erkannten Objekts zu bestimmen. Beispielsweise kann in der Datenbank eine typische 3D Form eines Fahrzeugs, eines Pfosten oder eines Blumenkübels hinterlegt sein und sobald das Objekt durch die Auswerteeinheit erkannt wurde, kann die entsprechende vordefinierte 3D Form aus der Datenbank bzw. der Tabelle entnommen werden und zu der Projektionsfläche hinzugefügt werden. Somit kann auf eine 3D Erkennung und zusätzliche Sensoren in der Erfassungseinheit verzichtet werden und Rechenzeit kann in der Auswerteeinheit eingespart werden, da nicht die konkrete 3D Form des Objekts bestimmt werden muss, sondern die 3D Form ist bereits vorhanden und kann ausgewählt und zu der Projektionsfläche hinzugefügt werden.

Gemäß einer weiteren Ausführungsform der Erfindung ist Auswerteeinheit dazu eingerichtet, die 3D Form des erkannten Objekts aus den erfassten Umfelddaten der Erfassungseinheit zu bestimmen.

Die 3D Form des erkannten Objekts kann auch durch die Erfassungseinheit bestimmt werden oder durch die Auswerteeinheit berechnet werden. Beispielsweise kann die Erfassungseinheit zusätzliche Sensoren zur Tiefenbestimmung aufweisen (z.B. Radar, Ultraschall, oder Lidar oder Laser), welche dazu eingerichtet sind, 3D Formen zu bestimmen. Alternativ oder zusätzlich kann auch die Auswerteeinheit eine 3D Form berechnen bzw. bestimmen, wenn beispielsweise Umfelddaten von dem Objekt von zwei verschiedenen Kameras aus verschiedenen Blickwinkeln bzw. Perspektiven vorliegen, somit kann mittels Stereoskopie die 3D Form des erkannten Objekts berechnet bzw. bestimmt werden.

Gemäß einer Ausführungsform nicht wie in der beanspruchten Erfindung ist die Auswerteeinheit dazu eingerichtet, den durch das Objekt verdeckten Bereich in den Umfelddaten bei der Projektion der Umfelddaten auf die angepasste Projektionsfläche durch eine vordefinierte Farbe oder durch ein Muster aufzufüllen.

Durch das Hinzufügen der 3D Form des erkannten Objekts zu der Projektionsfläche, kann in der Projektionsfläche ein Bereich entstehen, zu welchem keine Umfelddaten vorliegen, da dieser durch das Objekt verdeckt wurde. Mit andere Worten kann die Erfassungseinheit nicht um das Objekt sehen. Dieser verdeckte Bereich kann beispielsweise durch eine vordefinierte Farbe oder durch ein vordefiniertes Muster aufgefüllt werden, z.B. Schwarz.

Mit anderen Worten kann der verdeckte Bereich bei der Projektion durch vordefinierte Umfelddaten aufgefüllt werden.

Gemäß einer weiteren Ausführungsform der Erfindung ist die Auswerteeinheit dazu eingerichtet, den durch das Objekt verdeckten Bereich in den Umfelddaten bei der Projektion der Umfelddaten auf die angepasste Projektionsfläche durch eine Interpolation der umgebenden Umfelddaten aufzufüllen.

Neben dem Auffüllen des verdeckten Bereichs durch eine vordefinierte Farbe, können die Umfelddaten des verdeckten Bereichs auch mittels Interpolation aufgefüllt werden, sodass zwischen den Umfelddaten der an den verdeckten Bereich angrenzenden Bereiche interpoliert wird, um Umfelddaten für den verdeckten Bereich zu erzeugen.

Gemäß einer Ausführungsform der Erfindung ist die Auswerteeinheit dazu eingerichtet, den durch das Objekt verdeckten Bereich in den Umfelddaten bei der Projektion der Umfelddaten auf die angepasste Projektionsfläche durch eine Spiegelung der Umfelddaten der Vorderseite des Objekts aufzufüllen.

Ferner kann der verdeckt Bereich durch die Umfelddaten der Vorderseite des Objekts gespiegelt werden, wobei die Vorderseite die Seite des Objekts ist, welche durch die Erfassungseinheit erfasst wurde. Beispielsweise wenn das Objekt ein Pfosten ist, ist dieser typischerweise Vorne und Hinten gleich gestaltet, somit können die Bilddaten der Vorderseite auch auf dessen Rückseite projiziert werden.

Alternativ oder zusätzlich können die oben beschriebenen Verfahren zur Erzeugung von Umfelddaten für den verdeckten Bereich auch kombiniert werden.

Gemäß einer weiteren Ausführungsform nicht wie in der beanspruchten Erfindung ist die Auswerteeinheit dazu eingerichtet, den durch das Objekt verdeckten Bereich in den Umfelddaten aus der Projektionsfläche zu entfernen.

Neben dem Auffüllen der Projektionsfläche mit erzeugten oder vordefinierten Umfelddaten, kann der verdeckte Bereich auch aus der Projektionsfläche entfernt werden. Für den verdeckten Bereich sind keine expliziten Umfelddaten vorhanden, somit kann auch keine explizite Aussage über diesen Bereich getroffen werden. Basierend darauf kann die Projektionsfläche derart angepasst werden, dass diese nur Bereiche enthält, zu welchen auch Umfelddaten vorliegen.

Ein weiterer Aspekt der Erfindung betrifft ein Fahrzeug mit einem vorhergehend und nachfolgend beschriebenen Surroundview-System. Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad. Ein weiterer Aspekt der Erfindung betrifft ein Verfahren zum Anpassen einer Projektionsfläche eines Surroundview-Systems gemäß Anspruch 7.

Es sei angemerkt, dass die Schritte des Verfahrens auch in einer anderen Reihenfolge oder gleichzeitig ausgeführt werden können. Ferner kann zwischen einzelnen Schritten auch eine längere Zeitspanne liegen.

Ein weiterer Aspekt der Erfindung betrifft ein Programmelement, das, wenn es auf eine Auswerteeinheit eines Surroundview-Systems ausgeführt werden, die Auswerteeinheit anleitet, das vorhergehend und nachfolgend beschriebene Verfahren durchzuführen.

Ein weiterer Aspekt der Erfindung betrifft ein computerlesbares Medium, auf dem ein Programmelement gespeichert ist, das, wenn es auf eine Auswerteeinheit eines Surroundview-Systems, die Auswerteeinheit anleitet, das vorhergehend und nachfolgend beschriebene Verfahren durchzuführen.

Weitere Merkmale, Vorteile und Anwendungsmöglichkeiten der Erfindung ergeben sich aus der nachfolgenden Beschreibung der Ausführungsbeispiele und der Figuren.

Die Figuren sind schematisch und nicht maßstabsgetreu. Sind in der nachfolgenden Beschreibung der Figuren gleiche Bezugszeichen angegeben, so bezeichnen diese gleiche oder ähnliche Elemente.
Fig. 1 zeigt ein Blockschaltbild eines Surroundview-Systems gemäß einer Ausführungsform der Erfindung.
Fig. 2 zeigt eine isometrische Ansicht der Grundform der Projektionsfläche für ein Surroundview-System.
Fig. 3 zeigt eine seitliche Ansicht der Grundform der Projektionsfläche für ein Surroundview-System.
Fig. 4 zeigt eine seitliche Ansicht einer angepassten Projektionsfläche für ein Surroundview-System gemäß einer Ausführungsform der Erfindung.
Fig. 5 zeigt ein Fahrzeug mit einem Surroundview-System gemäß einer Ausführungsform der Erfindung.
Fig. 6 zeigt ein Flussdiagramm für ein Verfahren zum Anpassen einer Projektionsfläche eines Surroundview-Systems gemäß einer Ausführungsform der Erfindung.

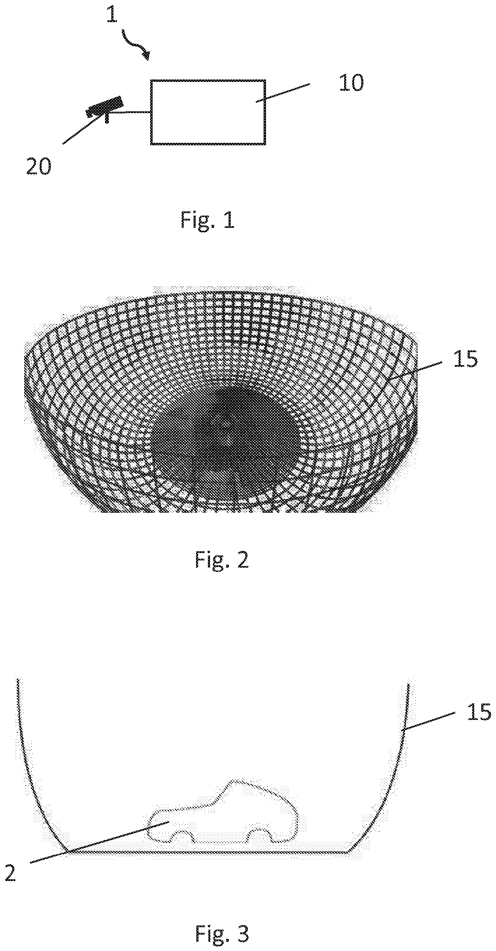

Fig. 1 zeigt ein Blockschaltbild eines Surroundview-Systems 1 für ein Fahrzeug gemäß einer Ausführungsform der Erfindung. Das Surroundview-System 1 weist eine Erfassungseinheit 20 und ein Auswerteeinheit 10 auf. Die Erfassungseinheit 20 kann Umfelddaten eines Fahrzeugs erfassen. Beispielsweise kann die Erfassungseinheit 20 eine Kamera oder mehrere Kameras aufweisen. Alternativ oder zusätzlich kann die Erfassungseinheit 20 auch einen Lidar-, einen Radar-, einen Ultraschallsensor, einen Laserscanner oder eine Kombination hieraus aufweisen. Insbesondere können durch die Erfassungseinheit 20 Objekte um das Fahrzeug erfasst werden. Die Auswerteeinheit 10 kann die durch die Erfassungseinheit 20 erfassten Umfelddaten zu einem Surroundview-Bild zusammenfügen und für den Fahrer eines Fahrzeugs darstellen, beispielsweise auf einer Anzeigeeinheit. Für die Darstellung des Surroundview-Bildes für den Fahrer können die erfassten Umfelddaten auf eine Projektionsfläche projiziert werden. Diese Projektionsfläche kann typischerweise die Form einer Schüssel oder einer Schale aufweisen, d.h. die Bereiche in unmittelbarer Nähe zu dem Fahrzeug können eben sein und die entfernteren Bereiche können nach oben gewölbt sein. Die Projektionsfläche kann auch als virtuelles Umgebungsmodell um das Fahrzeug verstanden werden. Die Projektionsfläche kann insbesondere dann sinnvoll sein, wenn das Surroundview-Bild dem Fahrer aus einer anderen Perspektive als die Perspektiven der Erfassungseinheit dargestellt wird. Ferner kann die Auswerteeinheit 10 ein Objekt in den Umfelddaten der Erfassungseinheit 20 erkennen und dessen 3D Form bestimmen. Die 3D Form des erkannten Objekts kann beispielsweise aus den Umfelddaten bestimmt werden, indem beispielsweise eine Stereo-Kamera die Tiefeninformation für das Objekt liefert oder indem beispielsweise die Erfassungseinheit 20 einen Sensor zur Tiefenbestimmung aufweist (z.B. ein Radar-, Ultraschall-, oder ein Lidarsensor oder ein Laserscanner). Alternativ oder zusätzlich kann die 3D Form der Objekte auch über einen Vergleich mit vordefinierten Objekten bestimmt werden, z.B. kann die Auswerteeinheit 10 ein Fahrzeug in den Umfelddaten erkennen und in einer Datenbank kann eine vordefinierte, typische 3D Form für ein Fahrzeug hinterlegt sein. Diese vordefinierte 3D Form kann anschließend durch die Auswerteeinheit 10 verwendet werden. Ferner kann die Auswerteeinheit 10 die bestimmte 3D Form des erkannten Objekts bzw. der erkannten Objekte zu der Projektionsfläche hinzufügen, wodurch eine angepasste Projektionsfläche entsteht. Mit anderen Worten kann die Projektionsfläche um das erkannte Objekt erweitert werden, sodass die angepasste Projektionsfläche eine bessere Repräsentation der Realität darstellt. Hierdurch kann die Projektion der erfassten Umfelddaten verbessert werden, wodurch bei einem Wechsel der Perspektive Verzerrungen in der Darstellung vermieden werden können. Ferner kann die Auswerteeinheit 10 die Umfelddaten auf die angepasste Projektionsfläche projizieren, um diese dem Fahrer des Fahrzeugs anzuzeigen.

Fig. 2 und Fig. 3 zeigen eine Projektionsfläche 15 für ein Surroundview-System für ein Fahrzeug 2. Diese Projektionsfläche 15 ist zum einen in einer isometrisch (Fig. 2) und zum andern in einer seitlichen (Fig. 3) Ansicht dargestellt. In der Mittel der Projektionsfläche 15 befindet sich jeweils das Fahrzeug 2 mit dem Surroundview-System. Die Projektionsfläche 15 weist eine Form auf, welche der Form einer Schüssel oder Schale entspricht. Hierbei ist der Bereich in der Nähe des Fahrzeugs eben und die Randbereiche wölben sich nach oben und außen, wobei der Umfang der Projektionsfläche mit steigender Höhe stetig zunimmt. Durch diese Form der Projektionsfläche kann, in einer ersten Näherung, eine gute Repräsentation der Umfelddaten für das Surroundview-System sichergestellt werden. Jedoch kann es bei in Realität erhabenen Objekten, welche sich in der Nähe des Fahrzeugs befinden, bei der Projektion auf diese Projektionsfläche 15 zu Verzerrungen in der Darstellung kommen. Insbesondere, wenn die Perspektive der Darstellung im Vergleich zu den real erfassten Umfelddaten virtuell geändert wird.

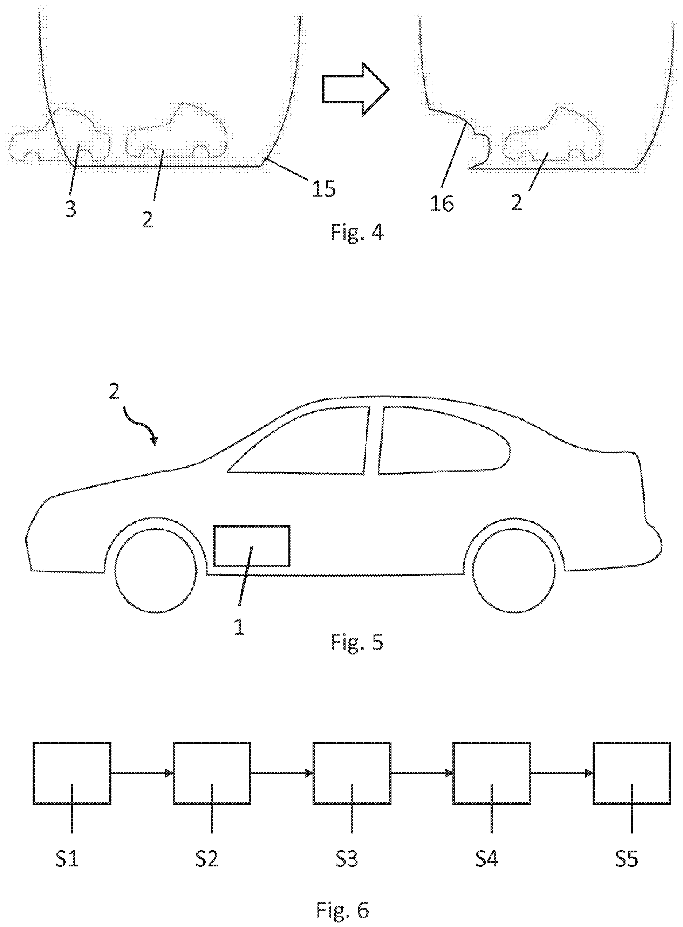

Fig. 4 zeigt eine Darstellung des Hinzufügens der 3D Form des erkannten Objekts 3 zu der Projektionsfläche 15. Auf der linken Seite der Fig. 4 ist ein Fahrzeug 2 und die Projektionsfläche 15 des Surroundview-Systems dargestellt. Ferner befindet sich auf der linken Seite der Fig. 4 ein weiteres Objekt 3, hier ein weiteres Fahrzeug. Dieses weitere Objekt 3 kann durch das Surroundview-System erkannt werden und die 3D Form des erkannten Objekts kann durch das Surroundview-System bestimmt werden, z.B. direkt über Sensoren oder indirekt mittels einem Vergleich mit einer Datenbank und vordefinierter 3D Formen für bestimmte Objekte. Auf der rechten Seite der Fig. 4 wurde die 3D Form des erkannten Objekts zu der Projektionsfläche 15 hinzugefügt, sodass eine angepasste Projektionsfläche 16 entsteht. Somit können die erfassten Umfelddaten realitätsnäher auf die Projektionsfläche projiziert werden. Durch das Hinzufügen der 3D Form des erkannten Objekts zu der Projektionsfläche 15 kann ein verdeckter Bereich in der angepassten Projektionsfläche 16 vorhanden sein, zu welchem keine expliziten Umfelddaten existieren, da das Objekt selbst diesen Bereich verdeckt. Mit diesem verdeckten Bereich kann in der angepassten Projektionsfläche 16 auf verschiedene Arten verfahren werden. Diese können, nicht wie in der beanspruchten Erfindung, mit einer vordefinierten Farbe oder einem vordefinierten Muster aufgefüllt werden, z.B. schwarz. Dieser verdeckter Bereich kann durch eine Interpolation der umliegenden Umfelddaten aufgefüllt werden. Des Weiteren kann die Vorderseite des erkannten Objekts auch auf dessen Rückseite (verdeckter Bereich) projiziert werden. Alternativ oder zusätzlich kann, nicht wie in der beanspruchten Erfindung, nicht nur das erkannte Objekt zu der Projektionsfläche hinzugefügt werden, sondern der durch das erkannte Objekt verdeckte Bereich kann aus der Projektionsfläche entfernt werden, sodass für die komplette angepasste Projektionsfläche 16 Umfelddaten vorhanden sind.

Fig. 5 zeigt ein Fahrzeug 2 mit einem vorhergehend und nachfolgend beschriebenen Surroundview-System 1. Für den Fahrer des Fahrzeugs 2 kann durch das beschriebene Surroundview-System eine verbesserte Abbildung der erfassten Umfelddaten erfolgen, wobei die Perspektive der Darstellung gemäß dem Fahrerwunsch geändert bzw. angepasst werden kann. Durch die Verwendung einer angepassten Projektionsfläche können Verzerrungen durch erhabene Objekte verringert bzw. vermieden werden.

Fig. 6 zeigt ein Flussdiagramm für ein Verfahren zum Anpassen einer Projektionsfläche für ein Surroundview-System. In Schritt S1 werden Umfelddaten von einer Erfassungseinheit erfasst. In diesen Umfelddaten kann in Schritt S2 ein Objekt erkannt werden. In Schritt S3 erfolgt die Bestimmung der 3D Form des in Schritt S2 erkannten Objekts. Die 3D Form des Objekts kann hierbei direkt durch die Erfassungseinheit erkannt werden oder durch die Auswerteeinheit berechnet werden, oder die Auswerteeinheit kann auf vordefinierte 3D Formen zurückgreifen und die passende auf Basis der erfassten Umfelddaten auswählen. In Schritt S4 wird die bestimmte 3D Form des Objekts zu der Projektionsfläche des Surroundview-Systems hinzugefügt. In Schritt S5 werden die Umfelddaten der Erfassungseinheit auf die angepasste Projektionsfläche projiziert.

## Patentansprüche

1. Surroundview-System (1) für ein Fahrzeug (2), aufweisend:
- eine Erfassungseinheit (20); und
- eine Auswerteeinheit (10),
wobei die Erfassungseinheit (20) dazu eingerichtet ist, Umfelddaten zu erfassen,
wobei die Auswerteeinheit (10) dazu eingerichtet ist, ein Objekt (3) in den erfassten Umfelddaten zu erkennen und deren 3D Form zu bestimmen,
wobei die Auswerteeinheit (10) ferner dazu eingerichtet ist, die bestimmte 3D Form einer Projektionsfläche (15) des Surroundview-Systems (1) für die erfassten Umfelddaten hinzuzufügen, sodass eine angepasste Projektionsfläche (16) entsteht, und
wobei die Auswerteeinheit (10) dazu eingerichtet ist, die Umfelddaten auf die angepasste Projektionsfläche (16) zu projizieren, **dadurch gekennzeichnet, dass** die Auswerteeinheit (10) dazu eingerichtet ist, den durch das Objekt (3) verdeckten Bereich in den Umfelddaten bei der Projektion der Umfelddaten auf die angepasste Projektionsfläche (16) durch eine Interpolation der umgebenden Umfelddaten und/oder durch eine Spiegelung der Umfelddaten der Vorderseite des Objekts (3) aufzufüllen.

2. Surroundview-System (1) gemäß Anspruch 1,
wobei die Erfassungseinheit (20) eine Kamera ist.

3. Surroundview-System (1) gemäß Anspruch 1 und 2,
wobei die 3D Form des erkannten Objekts (3) vordefiniert ist und mit dem durch die Auswerteeinheit (10) erkannten Objekt (3) korrespondiert.

4. Surroundview-System (1) gemäß Anspruch 1 und 2,
wobei Auswerteeinheit (10) dazu eingerichtet ist, die 3D Form des erkannten Objekts (3) aus den erfassten Umfelddaten der Erfassungseinheit (20) zu bestimmen.

5. Surroundview-System (1) gemäß einem der vorhergehenden Ansprüche,
wobei die Auswerteeinheit (10) dazu eingerichtet ist, den durch das Objekt (3) verdeckten Bereich in den Umfelddaten bei der Projektion der Umfelddaten auf die angepasste Projektionsfläche (16) durch eine Spiegelung der Umfelddaten der Vorderseite des Objekts (3) aufzufüllen.

6. Fahrzeug (2) mit einem Surroundview-System (1) gemäß einem der Ansprüche 1 bis 5.

7. Verfahren zum Anpassen einer Projektionsfläche (15) eines Surroundview-Systems (1), folgende Schritte aufweisend:
- Erfassen (S1) von Umfelddaten durch eine Erfassungseinheit (20);
- Erkennen (S2) eines Objekts (3) in den erfassten Umfelddaten;
- Bestimmen (S3) der 3D Form des erkannten Objekts (3);
- Hinzufügen (S4) der bestimmten 3D Form zu der Projektionsfläche (15) des Surroundview-Systems (1) für die erfassten Umfelddaten; und
- Projizieren (S5) der Umfelddaten auf die angepasste Projektionsfläche (16), wobei der durch das Objekt (3) verdeckte Bereich in den Umfelddaten bei der Projektion der Umfelddaten auf die angepasste Projektionsfläche (16) durch eine Interpolation der umgebenden Umfelddaten und/oder durch eine Spiegelung der Umfelddaten der Vorderseite des Objekts (3) aufgefüllt wird.

8. Programmelement, das, wenn es auf einer Auswerteeinheit eines Surroundview-Systems ausgeführt wird, das Surroundview-System anleitet, das Verfahren gemäß Anspruch 7 durchzuführen.

9. Computerlesbares Medium, auf dem ein Programmelement gemäß Anspruch 8 gespeichert ist.

## Claims

1. Surround view system (1) for a vehicle (2), comprising:
- a capture unit (20); and
- an evaluation unit (10),
wherein the capture unit (20) is configured to capture environment data,
wherein the evaluation unit (10) is configured to recognize an object (3) in the captured environment data and to determine its 3D shape,
wherein the evaluation unit (10) is furthermore configured to add the determined 3D shape to a projection surface (15) of the surround view system (1) for the captured environment data such that an adapted projection surface (16) arises, and
wherein the evaluation unit (10) is configured to project the environment data onto the adapted projection surface (16), **characterized in that** the evaluation unit (10) is configured to fill the region concealed by the object (3) in the environment data during the projection of the environment data onto the adapted projection surface (16) by an interpolation of the surrounding environment data and/or by a mirroring of the environment data of the front side of the object (3).

2. Surround view system (1) according to Claim 1,
wherein the capture unit (20) is a camera.

3. Surround view system (1) according to Claims 1 and 2,
wherein the 3D shape of the recognized object (3) is predefined and corresponds to the object (3) recognized by the evaluation unit (10).

4. Surround view system (1) according to Claims 1 and 2,
wherein the evaluation unit (10) is configured to determine the 3D shape of the recognized object (3) from the captured environment data of the capture unit (20).

5. Surround view system (1) according to any of the preceding claims,
wherein the evaluation unit (10) is configured to fill the region concealed by the object (3) in the environment data during the projection of the environment data onto the adapted projection surface (16) by a mirroring of the environment data of the front side of the object (3).

6. Vehicle (2) having a surround view system (1) according to any of Claims 1 to 5.

7. Method for adapting a projection surface (15) of a surround view system (1), comprising the following steps:
- capturing (S1) environment data by way of a capture unit (20);
- recognizing (S2) an object (3) in the captured environment data;
- determining (S3) the 3D shape of the recognized object (3);
- adding (S4) the determined 3D shape to the projection surface (15) of the surround view system (1) for the captured environment data; and
- projecting (S5) the environment data onto the adapted projection surface (16), wherein the region concealed by the object (3) in the environment data is filled during the projection of the environment data onto the adapted projection surface (16) by an interpolation of the surrounding environment data and/or by a mirroring of the environment data of the front side of the object (3).

8. Program element which, when executed on an evaluation unit of a surround view system, instructs the surround view system to carry out the method according to Claim 7.

9. Computer-readable medium on which a program element according to Claim 8 is stored.

## Revendications

1. Système de vision panoramique (1) pour un véhicule (2), possédant :
- une unité d'acquisition (20) ; et
- une unité d'évaluation (10),
l'unité d'acquisition (20) étant conçue pour acquérir des données d'environnement, l'unité d'évaluation (10) étant conçue pour reconnaître un objet (3) dans les données d'environnement acquises et pour déterminer sa forme 3D,
l'unité d'évaluation (10) étant en outre conçue pour ajouter la forme 3D déterminée à une surface de projection (15) du système de vision panoramique (1) pour les données d'environnement acquises, de sorte qu'il en résulte une surface de projection (16) adaptée, et
l'unité d'évaluation (10) étant conçue pour projeter les données d'environnement sur la surface de projection (16) adaptée, **caractérisé en ce que** l'unité d'évaluation (10) est conçue pour remplir la zone cachée par l'objet (3) dans les données d'environnement lors de la projection des données d'environnement sur la surface de projection adaptée (16) par une interpolation des données d'environnement ambiantes et/ou par une réflexion des données d'environnement du côté avant de l'objet (3).

2. Système de vision panoramique (1) selon la revendication 1,
l'unité d'acquisition (20) étant une caméra.

3. Système de vision panoramique (1) selon les revendications 1 et 2,
la forme 3D de l'objet (3) reconnu étant prédéfinie et correspondant à l'objet (3) reconnu par l'unité d'évaluation (10).

4. Système de vision panoramique (1) selon les revendications 1 et 2,
l'unité d'évaluation (10) étant conçue pour déterminer la forme 3D de l'objet (3) reconnu à partir des données d'environnement acquises par l'unité d'acquisition (20).

5. Système de vision panoramique (1) selon l'une des revendications précédentes, l'unité d'évaluation (10) étant conçue pour remplir la zone cachée par l'objet (3) dans les données d'environnement lors de la projection des données d'environnement sur la surface de projection (16) adaptée par une réflexion des données d'environnement du côté avant de l'objet (3).

6. Véhicule (2) comprenant un système de vision panoramique (1) selon l'une des revendications 1 à 5.

7. Procédé d'adaptation d'une surface de projection (15) d'un système de vision panoramique (1), comprenant les étapes suivantes :
- acquisition (S1) de données d'environnement par une unité d'acquisition (20) ;
- reconnaissance (S2) d'un objet (3) dans les données d'environnement acquises ;
- détermination (S3) de la forme 3D de l'objet (3) reconnu ;
- ajout (S4) de la forme 3D déterminée à la surface de projection (15) du système de visualisation panoramique (1) pour les données d'environnement acquises ; et
- projection (S5) des données d'environnement sur la surface de projection (16) adaptée, la zone cachée par l'objet (3) dans les données d'environnement étant remplie lors de la projection des données d'environnement sur la surface de projection (16) adaptée par une interpolation des données d'environnement ambiantes et/ou par une réflexion des données d'environnement du côté avant de l'objet (3).

8. Élément de programme qui, lorsqu'il est exécuté sur une unité d'évaluation d'un système de visualisation panoramique, guide le système de visualisation panoramique pour mettre en œuvre le procédé selon la revendication 7.

9. Support lisible par ordinateur, sur lequel est enregistré un élément de programme selon la revendication 8.
